# EUROPÄISCHE PATENTSCHRIFT

(11) **EP 2 507 112 B1**
(45) Veröffentlichungstag und Bekanntmachung des Hinweises auf die Patenterteilung: **18.12.2013**
(21) Anmeldenummer: 10771045.1
(22) Anmeldetag: 04.10.2010
(51) Int. Cl.: B62D 6/00, B62D 15/02, B60T 8/172, B60T 8/1764, B60W 30/09, B60W 30/095

(54) **VERFAHREN ZUR BESTIMMUNG EINER TRAJEKTORIE EINES FAHRZEUGS**
METHOD FOR DETERMINING A TRAJECTORY OF A VEHICLE
PROCÉDÉ DE DÉTERMINATION D'UNE TRAJECTOIRE D'UN VÉHICULE

(30) Priorität: 01.12.2009 DE 102009047333
(43) Veröffentlichungstag der Anmeldung: 10.10.2012
(73) Patentinhaber: Robert Bosch GmbH, 70442 Stuttgart (DE)
(72) Erfinder: KLOSS, Florian, 70499 Stuttgart (DE)
(86) Internationale Anmeldenummer: PCT/EP2010/064727
(87) Internationale Veröffentlichungsnummer: WO 2011/067009

(56) Entgegenhaltungen:
- DE-A1-102004 057 745
- DE-A1-102008 005 305

## Beschreibung

Die Erfindung betrifft ein Verfahren zur Bestimmung einer Trajektorie eines Fahrzeugs.

### Stand der Technik

Während eines Fahrmanövers, z. B. Bremsmanövers, Ausweichmanövers, Aquaplaning, etc. folgt ein Fahrzeug i. d. R. der vom Fahrer am Lenkrad vorgegebenen Fahrtrichtung. Wenn das Fahrzeug ein automatisches Hindernis-Ausweichsystem umfasst, folgt das Fahrzeug der vom System vorgegebenen Bewegungsbahn. Der Bremsweg bestimmt sich dabei durch die an den Radbremsen ausgeübte Bremskraft und den Reibwert der Fahrbahn entlang der Bewegungsbahn. Bei niedrigen Reibwerten (z. B. schneebedeckte Fahrbahn) ist der Bremsweg grundsätzlich länger als bei einer trockenen, griffigen Fahrbahn mit hohem Reibwert.

In der Praxis können Fahrsituationen auftreten, in denen das Fahrzeug auf einer Fahrbahn mit stark unterschiedlichen Reibwerten fährt. So kann das Fahrzeug z. B. in Spurrillen fahren, die mit Wasser gefüllt sind, während die übrige Fahrbahn schon trocken ist. Oder das Fahrzeug kann mit zwei Rädern auf einer am Straßenrand befindlichen Eisfläche fahren, während die beiden anderen Räder auf trockenem Asphalt fahren. In einer solchen Situation ergibt sich ein verhältnismäßig langer Bremsweg, sofern der Fahrer das Fahrzeug nicht aktiv in den Fahrbahnbereich mit dem höheren Reibwert hinein lenkt. Ein verlängerter Bremsweg ergibt sich auch, wenn das Assistenzsystem eine Bewegungsbahn gewählt hat, die über einen Fahrbahnbereich mit niedrigem Reibwert verläuft.

Ähnliche Überlegungen gelten auch für die Traktion eines Fahrzeugs bei einem Beschleunigungsvorgang, der auf einer Bewegungsbahn mit niedrigem Reibwert erfolgt. Auch hier wäre es möglich, die Traktion zu verbessern, wenn das Fahrzeug auf einem anderen Fahrbahnbereich mit höherem Reibwert beschleunigen würde. Ein Verfahren gemäß Oberbegriff des Anspruchs 1 ist aus DE 10 2004057745 A1 bekannt.

Es ist daher die Aufgabe der vorliegenden Erfindung ein Verfahren und eine Vorrichtung zur Verkürzung des Bremswegs bei einem Bremsvorgang oder zur Verbesserung der Traktion bei einem Beschleunigungsvorgang zu schaffen.

Diese Aufgabe wird durch die Merkmale des Anspruchs 1 oder 9 gelöst. Weitere Ausgestaltungen der Erfindung sind in den Unteransprüchen wiedergegeben.

### Offenbarung der Erfindung

Gemäß der Erfindung wird vorgeschlagen, mit Hilfe einer Sensorik eine Reibwertinformation von verschiedenen, vor dem Fahrzeug liegenden Fahrbahnbereichen zu ermitteln und schließlich eine Trajektorie in Abhängigkeit von den Reibwertinformationen zu bestimmen Durch die Ermittlung der Reibwertinformationen wird erkannt, in welchen Fahrbahnbereichen ein höherer und in welchen Bereichen ein niedrigerer Reibwert vorliegt. Damit ist es möglich, eine in Bezug auf den Bremsweg oder die Traktion günstige Trajektorie zu bestimmen. Durch eine Umfeldüberwachung kann optional ermittelt werden, ob auf einer erfindungsgemäß bestimmten Trajektorie die Gefahr einer Kollision mit einem Hindernis, z. B. einem entgegenkommenden Fahrzeug, besteht oder nicht. Im Falle einer Kollisionsgefahr wird die Trajektorie vorzugsweise als unzulässig verworfen. Andernfalls wird sie als zulässig betrachtet.

Als Reibwertinformation gilt gemäß der Erfindung jede Information, aus der sich ein Hinweis auf den Reibwert eines Fahrbahnbereichs ergibt, wie z. B. eine Temperatur-, Licht- oder Reflexionsverteilung oder optische Bilddaten. Zur Ermittlung der Reibwertinformation können entsprechend Video-, Radar-, Lidar- oder Ultraschallsensoren, eine Kombination aus diesen Sensoren, oder andere geeignete Sensoren verwendet werden, wie sie aus dem Stand der Technik bekannt sind. Zur Umfelderkennung kann, sofern möglich, der gleiche Sensor verwendet werden. Die Ausgangssignale der Sensorik werden vorzugsweise von einem Steuergerät, in dem eine entsprechende Software enthalten ist, in Bezug auf den Reibwert der Fahrbahn und mögliche Hindernisse ausgewertet.

Sofern eine Trajektorie bestimmt wurde, deren Reibwert bestimmten Kriterien entspricht und auf der gleichzeitig keine Kollisionsgefahr besteht, wird das Fahrzeug vorzugsweise durch Ausübung eines automatischen Lenk- oder Bremseingriffs auf die bestimmte Trajektorie geführt. Das Fahrzeug wird vorzugsweise von einem Regler auf der Trajektorie gehalten.

Gemäß einer ersten Ausführungsform des Verfahrens wird die Trajektorie so gewählt, dass zumindest ein Teil der zu einer Trajektorie gehörigen Reibwertinformationen einen bestimmten Schwellenwert über- oder unterschreitet. So kann z. B. vorgesehen sein, dass alle oder 80% der Reibwerte größer sein müssen als ein bestimmter Schwellenwert. Alternativ kann z. B. auch vorgesehen sein, dass zumindest die Reibwertinformationen in einem Teilbereich der Trajektorie bestimmten Kriterien genügen müssen.

Alternativ oder zusätzlich kann vorgegeben sein, dass die Summe oder ein Mittelwert der Reibwertinformationen der Fahrbahnbereiche, über die die Trajektorie verläuft, einen bestimmten Schwellenwert überschreiten muss.

Während des Fahrbetriebs wird die Trajektorie des Fahrzeugs vorzugsweise fortlaufend neu bestimmt. Sollte sich bezüglich der zuvor bestimmten Trajektorie eine Änderung ergeben, wird das Fahrzeug vorzugsweise auf die neu bestimmte Trajektorie geführt.

Der automatische Lenk- oder Bremseingriff wird vorzugsweise nur so ausgeführt, dass das Fahrzeug durch den Eingriff nicht in einen instabilen Zustand gerät.

### Kurze Beschreibung der Zeichnungen

Ausführungsbeispiele, aus denen sich weitere erfinderische Merkmale ergeben können, auf die die Erfindung aber in ihrem Umfang nicht beschränkt ist, sind in den Zeichnungen dargestellt. Es zeigen:
Fig 1. ein Fahrzeug, das sich mit einer Geschwindigkeit v auf einer Fahrbahn bewegt, in einer ersten Verkehrssituation; und
Fig. 2 ein Fahrzeug, das sich mit einer Geschwindigkeit v auf einer Fahrbahn bewegt, in einer zweiten Verkehrssituation.

### Ausführungsformen der Erfindung

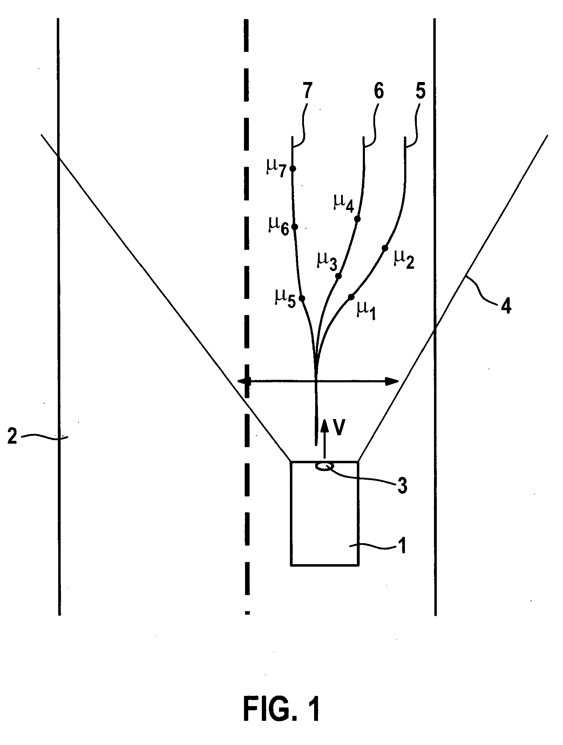

In Fig. 1 ist eine Verkehrssituation dargestellt, in der sich ein Fahrzeug 1 mit einer Geschwindigkeit v auf einer Fahrbahn 2 bewegt. Das Fahrzeug 1 weist hier einen Sensor 3 auf, der eine Reibwertverteilung der vor dem Fahrzeug liegenden Fahrbahnoberfläche ermittelt. Der Erfassungsbereich des Sensors 3 ist mit dem Bezugszeichen 4 bezeichnet.

Der Sensor 3 kann z. B. einen Video-, Radar-, Lidar- oder Ultraschallsensor, oder eine Kombination aus diesen Sensoren umfassen. Die Ausgangssignale des Sensors 3 werden von einem Steuergerät mit einer entsprechenden Auswertesoftware verarbeitet und daraus-eine Reibwertinformation bestimmt. Daraus ergibt sich eine Umweltkarte mit einer Reibwertverteilung µ₁-µ₇, wie sie in der Figur angedeutet ist. Diese Reibwertverteilung wird vom Fahrer beim Steuern des Fahrzeugs üblicherweise nicht berücksichtigt oder ist ihm nicht bekannt. Der Fahrer wählt seine Trajektorie üblicherweise nach anderen Kriterien und lenkt das Fahrzeug auf der von ihm gewählten Bewegungsbahn. Bei einer Notbremsung kann sich daher ein unnötig langer Bremsweg ergeben, sofern der Fahrer das Fahrzeug nicht aktiv in einen Fahrbahnbereich mit höherem Reibwert hinein lenkt.

Auf Grundlage der Reibwertverteilung wird erfindungsgemäß wenigstens eine Trajektorie 5,6,7 bestimmt, die gegenüber der vom Fahrer gewählten Trajektorie einen kürzeren Bremsweg oder eine bessere Traktion ermöglicht. Hierzu ist ein entsprechender Algorithmus in einem Steuergerät (nicht gezeigt) hinterlegt. Zur Bestimmung der Trajektorien 5,6,7 können beispielsweise nur diejenigen Reibwerte berücksichtigt werden, die einen vorgegebenen Schwellenwert überschreiten. Auf Grundlage dieser Reibwerte werden dann zusammenhängende Fahrbahnbereiche und eine zugehörige Trajektorie ermittelt. Alternativ kann auch vorgegeben sein, dass die Summe oder ein Mittelwert der Reibwerte µ entlang einer Trajektorie einen Schwellenwert überschreiten muss. Darüber hinaus können auch weitere Bedingungen vorgegeben werden, wie z. B. dass die Richtungsänderung der bestimmten Trajektorie gegenüber der vom Fahrer gewählten Bewegungsbahn nicht größer sein darf als ein vorgegebener Wert, z. B. 5°, oder dass durch den automatischen Eingriff verursachte Seitenkräfte am Fahrzeug einen bestimmten Schwellenwert nicht überschreiten dürfen.

Nach der Bestimmung möglicher Trajektorien 5, 6, 7 wird das Fahrzeugumfeld mittels einer Umfeldsensorik hinsichtlich eines Hindernisses überwacht. Hierbei kann beispielsweise derselbe Sensor wie zur Ermittlung der Reibwerte der Fahrbahnoberfläche verwendet werden. Eine Auswertesoftware, wie z. B. eine Bildverarbeitungssoftware, erkennt zulässige Trajektorien und solche, in denen die Gefahr einer Kollision mit einem Hindernis droht. Wie Fig. 1 zeigt, ist in der dargestellten Fahrsituation kein Hindernis vorhanden. Demnach kann eine der zuvor bestimmten Trajektorien 5, 6, 7 nach vorgegebenen Kriterien ausgewählt und das Fahrzeug auf diese Trajektorie geführt werden. Die Reihenfolge von Trajektorienbestimmung und Umfeldüberwachung kann auch umgekehrt werden.

Das Fahrzeug wird schließlich durch Ausübung eines automatischen Lenk- oder Bremseingriffs auf die bestimmte Trajektorie, z. B. 6, geführt. Hierzu ist vorzugsweise eine Regelung vorgesehen. Alternativ wäre es auch denkbar, dass das Fahrzeug nicht vollautomatisch, sondern erst nach einer Fahrerbestätigung, wie z. B. einer Lenkbewegung in Richtung der Trajektorie, auf die Trajektorie geführt wird. Gemäß einer noch anderen Ausführungsform kann vorgesehen sein, dass der Fahrer den optimalen Fahrweg angezeigt bekommt, die Fahrtrichtungskorrektur dann aber selbst vornehmen muss.

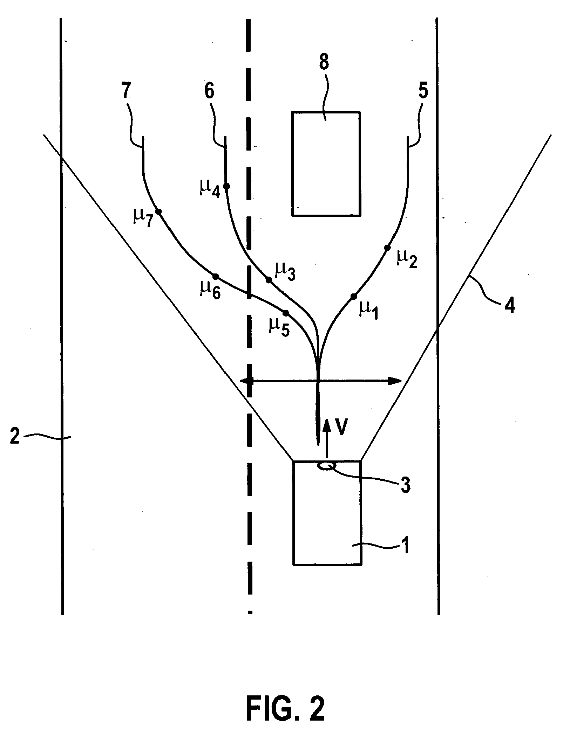

In Fig. 2 ist eine ähnliche Situation wie in Fig. 1 dargestellt, in der allerdings ein Hindernis 8 (stehendes Fahrzeug) auf der Fahrbahn 2 vorhanden ist. Dieses wird von der Umfeldsensorik erkannt. Anschließend werden mögliche kollisionsfreie Trajektorien 5,6,7 bestimmt und in Bezug auf deren Reibwerteigenschaften bewertet. Schließlich wird aus den möglichen Trajektorien nach den vorstehend genannten Kriterien eine bestimmte Trajektorie, z. B. 6, ausgewählt und das Fahrzeug automatisch auf diese Trajektorie geführt.

Die Trajektorien werden vorzugsweise regelmäßig neu berechnet. Sofern sich eine Änderung in der optimalen Trajektorie (z. B. 6) ergibt, wird das Fahrzeug auf die neu bestimmte Trajektorie geführt.

Obwohl die vorliegende Erfindung durch beispielhafte Ausführungsformen ausführlich dargelegt wurde, ist sie nicht auf die vorstehend beschriebenen Ausführungsformen begrenzt. Es können durch einen Fachmann verschiedene Modifikationen innerhalb des Umfangs dieser Erfindung durchgeführt werden.

## Patentansprüche

1. Verfahren zur Bestimmung einer Trajektorie (5, 6, 7) eines Fahrzeugs (1), **gekennzeichnet durch** folgende Schritte:
- Ermitteln von Reibwertinformationen verschiedener Fahrbahnbereiche mit Hilfe einer Sensorik (3); und
- Bestimmen einer Trajektorie (5, 6, 7) in Abhängigkeit von den Reibwertinformationen.

2. Verfahren nach Anspruch 1, **dadurch gekennzeichnet, dass** eine Umfelderkennung zur Erfassung eines Hindernisses durchgeführt und die Trajektorie (5, 6, 7) unter Berücksichtigung des Ergebnisses der Umfelderkennung bestimmt wird.

3. Verfahren nach Anspruch 1, **dadurch gekennzeichnet, dass** die Trajektorie (5, 6, 7) so gewählt wird, dass zumindest ein Teil der Reibwertinformationen der Fahrbahnbereiche, über die die Trajektorie (5, 6, 7) verläuft, einen bestimmten Schwellenwert überschreitet.

4. Verfahren nach Anspruch 1 oder 2, **dadurch gekennzeichnet, dass** die Trajektorie (5, 6, 7) so gewählt wird, dass die Summe oder ein Mittelwert der Reibwertinformationen der Fahrbahnbereiche, über die die Trajektorie (5, 6, 7) verläuft, einen bestimmten Schwellenwert überschreitet.

5. Verfahren nach einem der vorhergehenden Ansprüche, **dadurch gekennzeichnet, dass** die Reibwertinformationen mittels eines Video-, Radar-, Lidar- oder eines Ultraschallsensors, einer Kombination aus diesen Sensoren erfasst werden.

6. Verfahren nach einem der vorhergehenden Ansprüche, **dadurch gekennzeichnet, dass** die Trajektorie (5, 6, 7) des Fahrzeugs (1) fortlaufend neu bestimmt wird.

7. Verfahren nach einem der vorhergehenden Ansprüche, **dadurch gekennzeichnet, dass** das Fahrzeug (1) durch Ausübung eines voll- oder teilautomatischen Lenk- oder Bremseingriffs auf die bestimmte Trajektorie (5, 6, 7) geführt wird.

8. Verfahren nach einem der vorhergehenden Ansprüche, **dadurch gekennzeichnet, dass** eine Regelung durchgeführt wird, mittels derer das Fahrzeug (1) auf die bestimmte Trajektorie (5, 6, 7) geführt wird.

9. Vorrichtung zur Bestimmung einer Trajektorie eines Fahrzeugs (1), umfassend Mittel zum Durchführen des Verfahrens nach einem der vorhergehenden Ansprüche.

## Claims

1. Method for determining a trajectory (5, 6, 7) of a vehicle (1), **characterized by** the following steps:
- determining coefficient of friction information of various roadway regions using a sensor system (3); and
- determining a trajectory (5, 6, 7) as a function of the coefficient of friction information.

2. Method according to Claim 1, **characterized in that** the surroundings are sensed in order to detect an obstacle, and the trajectory (5, 6, 7) is determined by taking into account the result of the sensing of the surroundings.

3. Method according to Claim 1, **characterized in that** the trajectory (5, 6, 7) is selected in such a way that at least part of the coefficient of friction information of the roadway regions via which the trajectory (5, 6, 7) runs exceeds a specific threshold value.

4. Method according to Claim 1 or 2, **characterized in that** the trajectory (5, 6, 7) is selected such that the sum or a mean value of the coefficient of friction information of the roadway regions via which the trajectory (5, 6, 7) runs exceeds a specific threshold value.

5. Method according to one of the preceding claims, **characterized in that** the coefficient of friction information is sensed by means of a video sensor, radar sensor, lidar sensor or an ultrasonic sensor or a combination of these sensors.

6. Method according to one of the preceding claims, **characterized in that** the trajectory (5, 6, 7) of the vehicle (1) is continuously newly determined.

7. Method according to one of the preceding claims, **characterized in that** the vehicle (1) is guided to the specific trajectory (5, 6, 7) by applying a fully automatic or partially automatic steering intervention or braking intervention.

8. Method according to one of the preceding claims, **characterized in that** a control process is carried out by means of which the vehicle (1) is guided to the specific trajectory (5, 6, 7).

9. Device for determining a trajectory of a vehicle (1), comprising means for carrying out the method according to one of the preceding claims.

## Revendications

1. Procédé de détermination de la trajectoire (5, 6, 7) d'un véhicule (1), le procédé étant **caractérisé par** les étapes suivantes :
à l'aide d'un ensemble (3) de capteurs, détermination d'informations sur le coefficient de frottement de différentes parties de la chaussée et
détermination d'une trajectoire (5, 6, 7) en fonction des informations de coefficient de frottement.

2. Procédé selon la revendication 1, **caractérisé en ce qu'**il détecte la présence d'obstacles dans l'environnement et **en ce que** la trajectoire (5, 6, 7) est déterminée en fonction du résultat de la détection de l'environnement.

3. Procédé selon la revendication 1, **caractérisé en ce que** la trajectoire (5, 6, 7) est sélectionnée de telle sorte qu'au moins une partie des informations de coefficient de frottement des parties de la chaussée sur lesquelles la trajectoire (5, 6, 7) s'étend dépasse une certaine valeur de seuil.

4. Procédé selon les revendications 1 ou 2, **caractérisé en ce que** la trajectoire (5, 6, 7) est sélectionnée de telle sorte que la somme ou une valeur moyenne des informations de coefficient de frottement des parties de la chaussée sur lesquelles la trajectoire (5, 6, 7) s'étend dépasse une certaine valeur de seuil.

5. Procédé selon l'une des revendications précédentes, **caractérisé en ce que** les informations de coefficient de frottement sont saisies au moyen d'un capteur vidéo, radar, lidar ou à ultrasons ou d'une combinaison de ces capteurs.

6. Procédé selon l'une des revendications précédentes, **caractérisé en ce que** la trajectoire (5, 6, 7) du véhicule (1) est en permanence déterminée à nouveau.

7. Procédé selon l'une des revendications précédentes, **caractérisé en ce que** le véhicule (1) est guidé en appliquant une action complètement ou partiellement automatique de guidage ou de freinage sur la trajectoire (5, 6, 7) définie.

8. Procédé selon l'une des revendications précédentes, **caractérisé en ce qu'**il exécute une régulation par laquelle le véhicule (1) est guidé sur la trajectoire (5, 6, 7) définie.

9. Dispositif en vue de la détermination d'une trajectoire d'un véhicule (1), le dispositif comprenant des moyens permettant d'exécuter le procédé selon l'une des revendications précédentes.
